# EUROPEAN PATENT SPECIFICATION

(11) **EP 2 341 804 B1**
(45) Date of publication and mention of the grant of the patent: **17.10.2012**
(21) Application number: 08775242.4
(22) Date of filing: 21.07.2008
(51) Int. Cl.: A47J 31/40

(54) **ASSEMBLY, PACKAGE AND APPARATUS FOR PREPARING A BEVERAGE**
ANORDNUNG, PACKUNG UND GERÄT ZUR ZUBEREITUNG EINES GETRÄNKS
ENSEMBLE, EMBALLAGE ET APPAREIL POUR LA PRÉPARATION D'UNE BOISSON

(43) Date of publication of application: 13.07.2011
(73) Proprietor: Vital Products B.V., 1251 EX Laren (NL)
(72) Inventor: SINOT, Sander Jeroen, 1251 NH Laren (NL); COSTERUS, Paul, 3825 RD Amersfoort (NL); LOUWERSE, Walter Pieter, 1221 AW Hilversum (NL)
(74) Representative: De Vries & Metman
(86) International application number: PCT/EP2008/059514
(87) International publication number: WO 2010/009753

(56) References cited:
- EP-A- 0 334 572
- EP-A- 1 243 210
- WO-A-2005/044067
- WO-A-2008/078990
- FR-A- 1 410 288
- US-A1- 2003 159 589

## Description

The invention firstly relates to an apparatus for preparing a beverage. Known apparatus of such type use a package comprising a concentrate for preparing a beverage, and the apparatus receives therein said package, opens the package and leads its contents into a mixing chamber in which the beverage is prepared by mixing the concentrate with water. The prepared beverage then is dispensed through a dispensing channel into a receptacle.

It is an object of the present invention to provide a novel assembly for preparing a beverage.

Thus, in accordance with the present invention, there is provided an apparatus according to the main claim.

Because of the position of the package rupturing means within the concentrate discharge channel without effectively protruding therefrom into the recess, the risk of an unintentional rupturing of the package or the risk of injuries to a user of the apparatus is minimized. Only when the package is pressurized sufficiently by the pressure means, it can deform such (due to its flexible nature) that it contacts the package rupturing means such that these can rupture the package as a result of which its contents (the concentrate) flows through the concentrate discharge channel towards the mixing chamber. The material of which the package is made should be flexible enough to allow such a deformation/bulging out. It is within the reach of persons skilled in the relevant art to chose such materials which are available on the market.

It is noted that the phrase "in a manner as not to protrude effectively into the recess" tries to express that it is within the scope of the present invention that the package rupturing means project slightly from the concentrate discharge channel, however not sufficiently far for rupturing the package or for injuring a user.

In an embodiment of the apparatus according to the present invention the package rupturing means do not protrude at all into the recess (and the package will bulge out into the concentrate discharge channel when pressurized by the pressure means).

Such an embodiment offers the best protection against unintentionally rupturing the package or against injuries.

When, in accordance with another embodiment of the apparatus according to the invention, the concentrate discharge channel is provided in a lower wall of the recess, the outflow of concentrate, once the package is ruptured by the package rupturing means, is aided by gravity.

Such an outflow of the concentrate, but also an effective operation of the package rupturing means, then may be optimized when, in accordance with yet another embodiment of the apparatus according to the invention, the concentrate discharge channel and the package rupturing means extend substantially vertically.

The package rupturing means should be effective in rupturing the package, preferably without the need for excessive high pressures by the pressure means. For example such package rupturing means may comprise a knife (of which the cutting edge is directed towards the recess). In a very effective embodiment of such package rupturing means the knife comprises two crossing knife blades. For example said crossing knife blades may define four inwardly inclined cutting edges for defining a central raised cutting point. Such a knife realises a cross-like cut with four flaps which easily open for the outflow of the concentrate.

In a very user-friendly embodiment of the apparatus according to the invention, the apparatus comprises package loading means for loading the package into the recess. Such package loading means are adapted to automatically position the package correctly in the recess. But also such loading means may be used for unloading or discharging a package when emptied by the pressure means.

For example, such package loading means may comprise drive wheels for engaging the package. These drive wheels may be controlled by sensors sensing the presence of a package.

It is noted, however, that also manually loading the package into the recess is within the scope of the present invention. Likewise, other loading means may be provided, for example a movable tray in accordance with a disc tray of a personal computer.

In yet another embodiment of the apparatus according to the present invention the apparatus comprises markings reading means (for reading markings provided on the package).

For example such markings and markings reading means may cooperate for at least one of the following purposes: checking the correct position of the package in the recess and based thereon allowing or preventing the operation of the apparatus; checking the nature of the package and based thereon allowing or preventing the operation of the apparatus; providing information about the package and its contents (for example taste, mixing ratio, expiration date).

Checking the correct position of the package in the recess may be needed to avoid a malfunction of the apparatus (for example spilling concentrate). Checking the nature of the package also may comprise checking the origin of the package. When the package comes from a non-authorized source the markings reading means may notify such to a control means which then prevents an operation of the apparatus. Providing information about the package may be helpful to a user of the package/apparatus.

For example the markings comprise, among others, any of: a bar code, rf-chip and a pattern of holes. Correspondingly, of course, the markings reading means then may comprise a bar code reader, a rf-receiver, a hole pattern scanner, or alike.

For avoiding an outflow of concentrate other than through the concentrate discharge channel, the apparatus according to the present invention may comprise sealing means surrounding the concentrate discharge channel. Such sealing means, e.g. a rubber ring encircling the mouth of the concentrate discharge channel, will effectively engage the package when latter is pressurized by the pressure means.

When, in accordance with another embodiment of the apparatus according to the present invention, the recess and/or mixing chamber are defined in removable inserts of the apparatus, these parts can be removed easily for cleansing purposes (for which, moreover, it may be necessary that at least the mixing chamber may be opened for accessing its interior). It is noted that, basically, the recess and mixing chamber (and interconnecting concentrate discharge channel) are the only parts which will come in contact with the concentrate and thus are the only parts which need a thorough cleansing.

Secondly the present invention relates to an assembly comprising a concentrate containing package and an apparatus according to the present invention. referring to the drawings, in which
Figure 1 shows, schematically, a top plan view of an embodiment of a package according to the present invention;
figure 2 shows, schematically, a partial top plan view of an embodiment of an apparatus according to the present invention;
figure 3 shows, schematically, a side elevational view of the apparatus of figure 2;
figure 4 shows a top plan view with the package partially received in the apparatus;
figure 5 shows a side elevational view of the situation according to figure 4;
figure 6 shows a top plan view with the package completely housed in the apparatus;
figure 7 shows a side elevational view of the situation of figure 6;
figure 8 shows a side elevational view corresponding to figure 7, however with the pressure means partially engaging the package;
figure 9 also shows a side elevational view corresponding to figure 7, however with the pressure means fully engaging the package;
figure 10 show a side elevational view corresponding to figure 7, after retraction of the pressure means;
figure 11 shows a top plan view of the package and apparatus during removal of the package from the apparatus, and
figure 12 shows a side elevational view of the situation of figure 11.

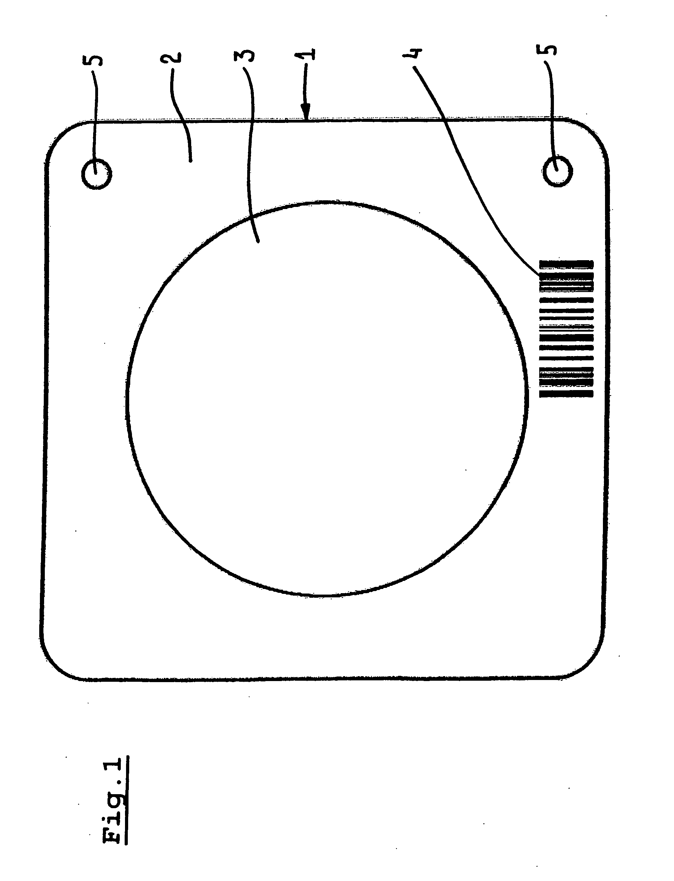

Figure 1 shows a package which, in combination with an apparatus to be described hereafter, is used for preparing a beverage. In the illustrated embodiment the package is substantially rectangular or square having a circumferential sealing edge 2 and a central pouch 3 for receiving therein a concentrate for preparing a beverage. The package may be defined by two sheets of material sealed to each other at the sealing edge and defining between central parts the pouch 3. Further figure 1 illustrates a barcode 4 imprinted upon the sealing edge 2 and two holes 5 in the sealing edge 2.

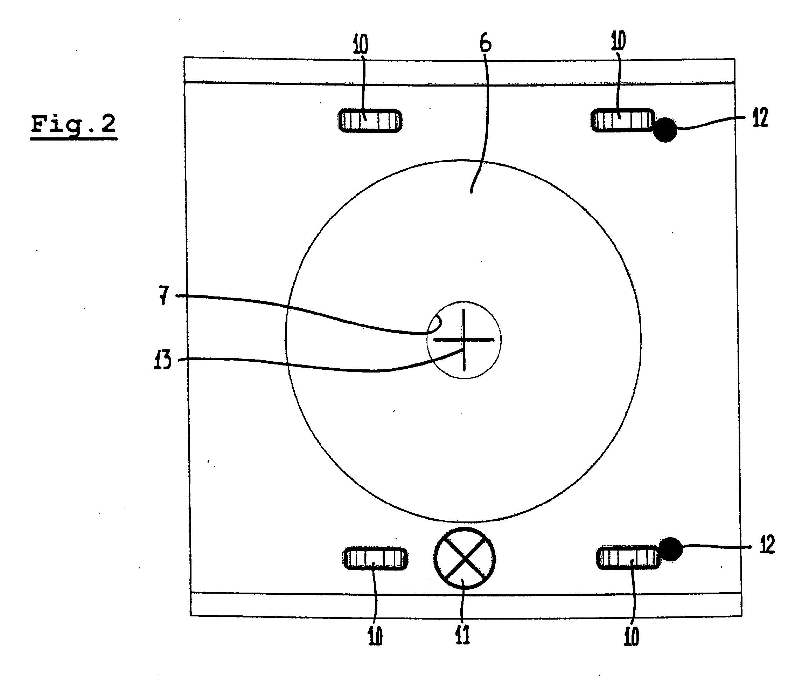

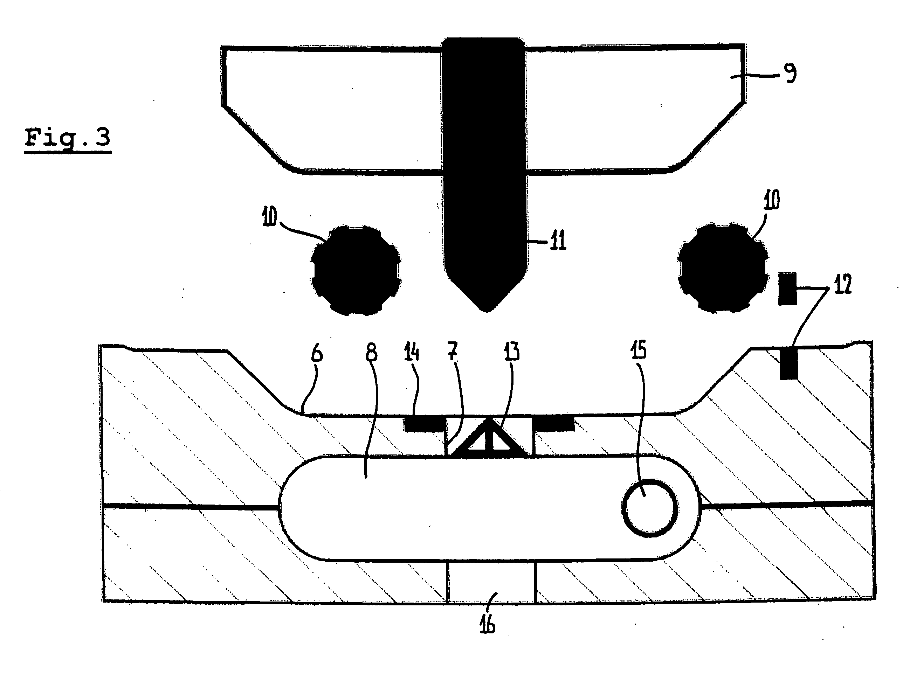

Referring to figures 2 and 3, an apparatus for use with the package 1 is illustrated schematically. It is noted, that only those parts of the apparatus have been illustrated which are necessary for understanding the present invention. Other components (such as for example drive means for moving parts of the apparatus) have not been illustrated, but are within the reach of a person skilled in the pertinent art.

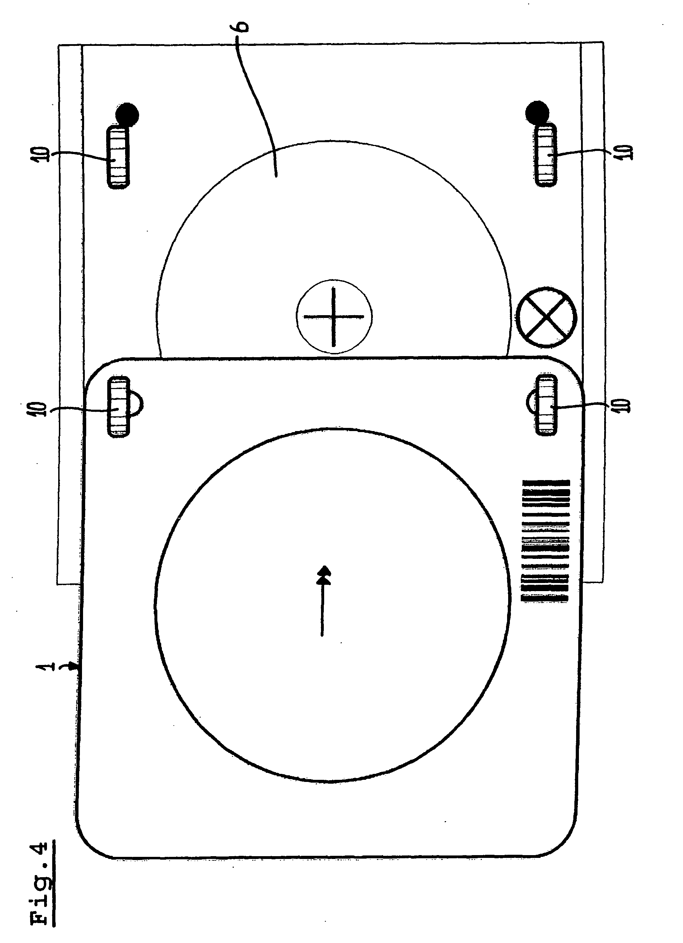

The apparatus comprises a recess 6 for at least partially receiving the package 1 (especially the pouch 3 of the package), a concentrate discharge channel 7 debouching in said recess 6 and connecting to a mixing chamber 8 and movable pressure means 9 for pressurizing the package. It is noted that said pressure means have not been illustrated in fig 2 or any other of the following top plan views (figs 4,6,11).

Further loading means 10 for loading the package 1 into the recess 6 (and unloading it therefrom) are provided, as well as a barcode reader 11 and scanning means 12.

The shape of the recess 6 will be adopted to the shape of the (pouch 4 of the) package 1 in an unloaded rest position. Likewise the shape of the lower part of the pressure means 9 corresponds with the shape of the recess 6. The concentrate discharge channel is provided in a lower wall of the recess 6 and extends substantially vertically.

In the present embodiment, the loading means 10 are shaped as toothed drive wheels for securely engaging the package 1, especially the sealing edge 2 thereof.

The bar code reader 11 will read the bar code 4 when the package 1 enters the recess 6. The scanning means 12 will cooperate with the holes 5 in the sealing edge 2 of the package 1 to determine whether or not the package 1 is in a correct position.

Within the concentrate discharge channel 7 package rupturing means 13 are positioned which, in the illustrated embodiment, are shaped as a knife comprising two crossing knife blades (see figure 2). This knife 13 is positioned such in the concentrate discharge channel 7 that it does not protrude into the recess 6 (see figure 3).

The apparatus operates in the following manner for preparing a beverage using the package 1:

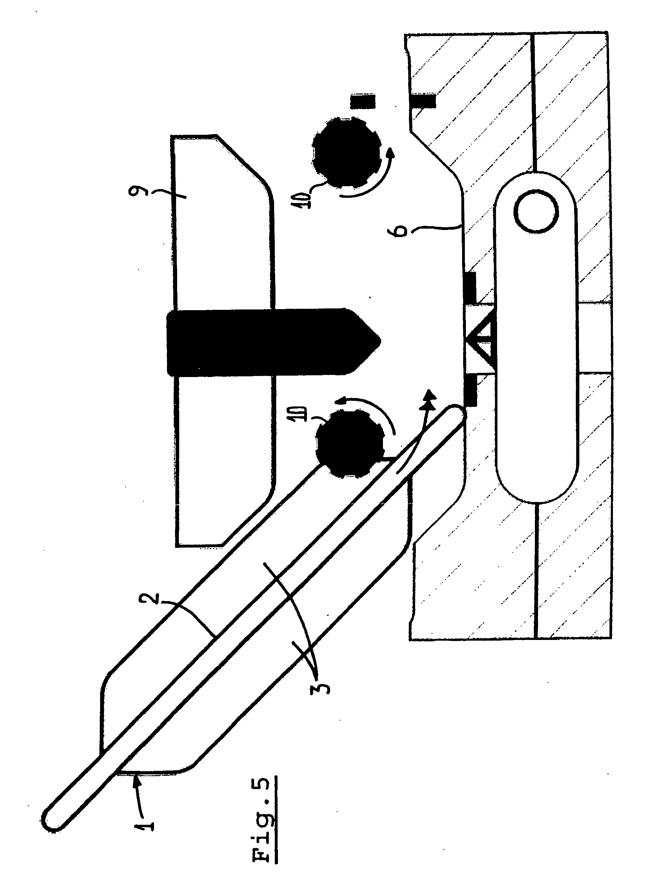

As illustrated in figures 4 and 5 a package 1 enters the apparatus and is gripped by the drive wheels 10 which engage the sealing edge 2 of the package 1. Sensors (not illustrated) may be present to detect a package 1 and to automatically activate the drive wheels 10. The pressure means 9 (for example a die movable upwards and downwards by means of an appropriate drive means not illustrated) is in an upper position.

Although, as illustrated, loading the package 1 into the recess 6 occurs automatically by means of the drive wheels 10, it also might be possible to use an embodiment in which the package 1 is positioned into the recess 6 manually.

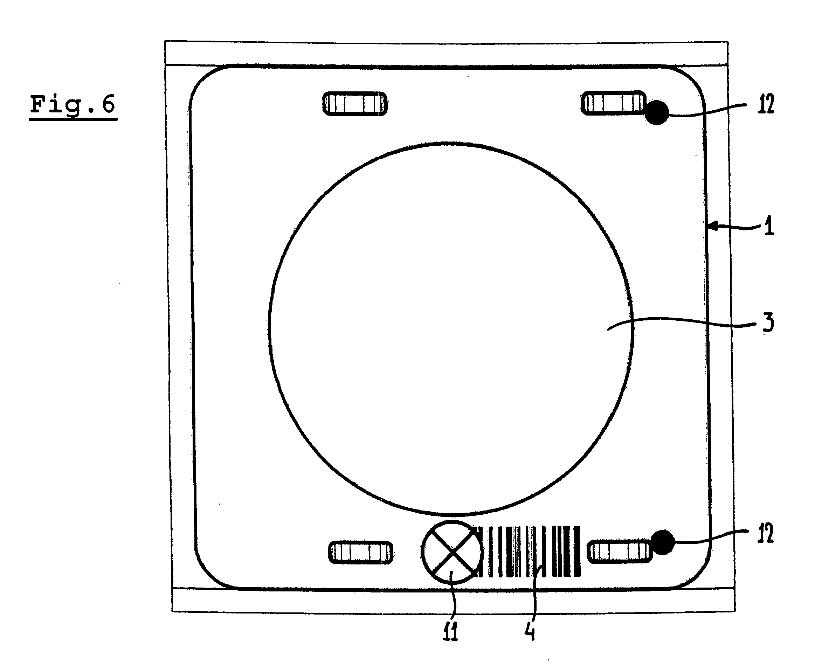

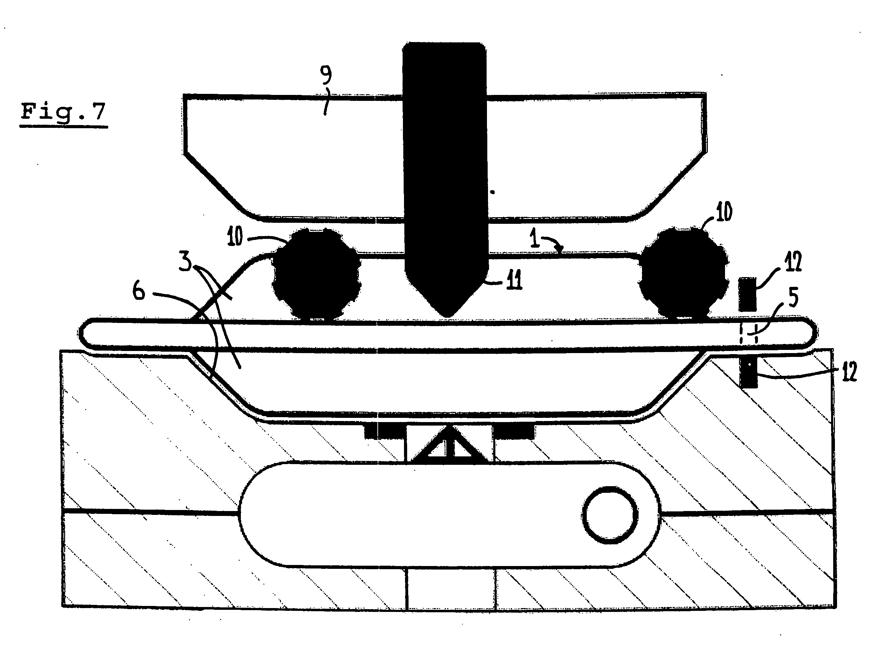

Figures 6 and 7 show a situation, in which the package 1 with its pouch 3 is positioned correctly in the recess 6. Such a correct positioning is determined by the scanning means 12 which in such a correct position are aligned with the holes 5 in the sealing edge 2 of the package 1.

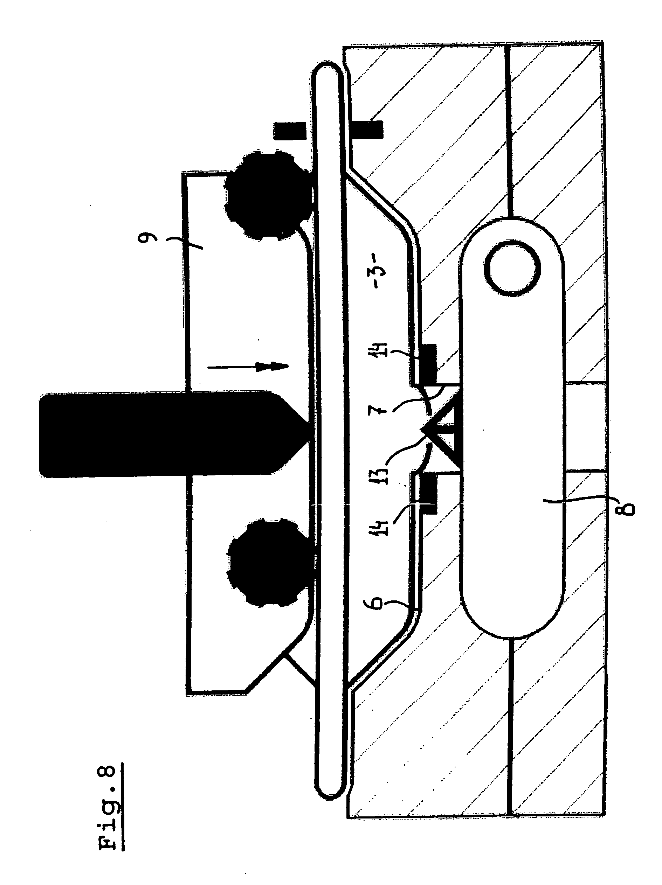

When such a correct positioning of the package 1 has been determined, the pressure means 9 is lowered, as illustrated in figure 8. As a result of lowering the pressure means 9, the package 1 is pressurized such that the part of the package 1 positioned just above the concentrate discharge channel 7 bulges out into this channel and engages knife 13. Thus knife 13 ruptures the package 1 and the contents thereof (concentrate) is free to flow into the concentrate discharge channel 7.

During this process a sealing means 14 (for example a rubber ring) surrounding the concentrate discharge channel 7 avoids that concentrate flow into the recess 6 instead of through the concentrate discharge channel.

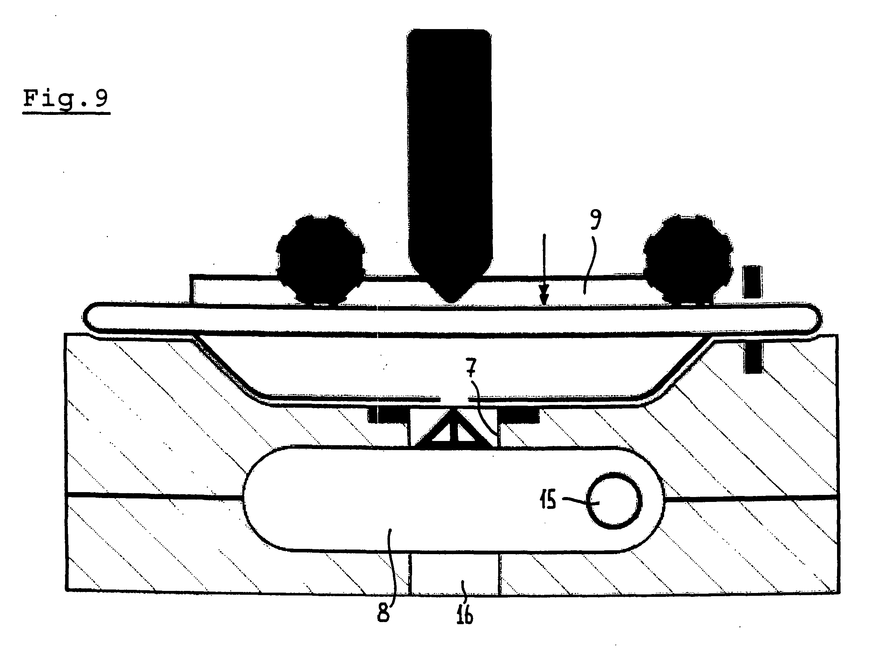

When the package 1 has been ruptured by the knife 13, a further downward movement of the pressure means 9 (figure 9) pushes the entire volume of concentrate out of the pouch 3 of the package 1 (the pouch is flattened), into the concentrate discharge channel 7 and towards the mixing chamber 8. An inlet 15 supplies water to the mixing chamber 8 such that the concentrate together with the water prepares the requested beverage which then leaves the mixing chamber 8 through an appropriate outlet 16.

The water may be supplied by the inlet 15 tangentially into the mixing chamber 8 creating a swirl for effectively mixing the concentrate with the water.

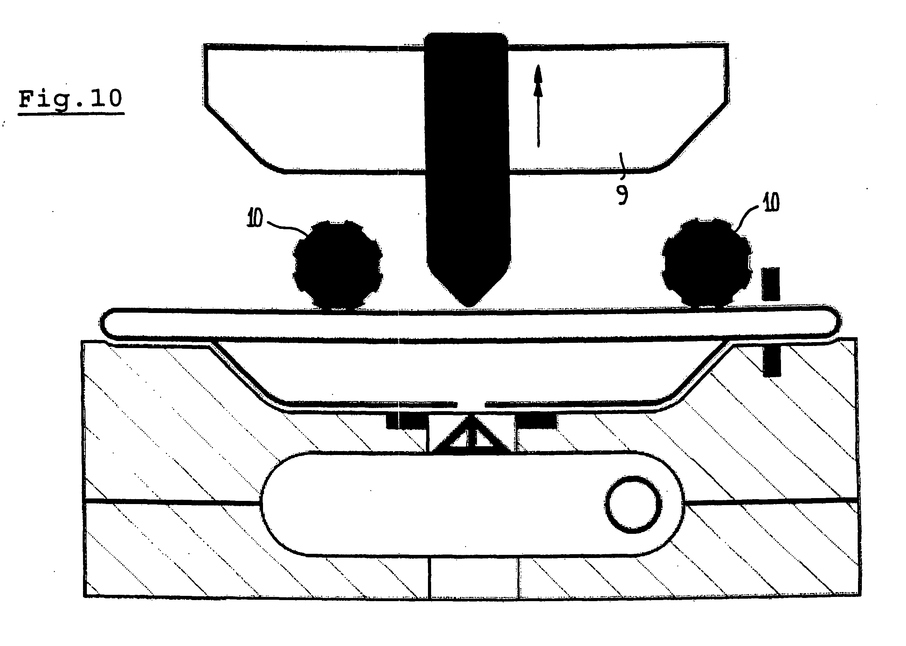

Figure 10 shows a situation, in which the pouch 3 of the package 1 is fully emptied (and flattened) and in which the pressure means 9 is retracted upwardly.

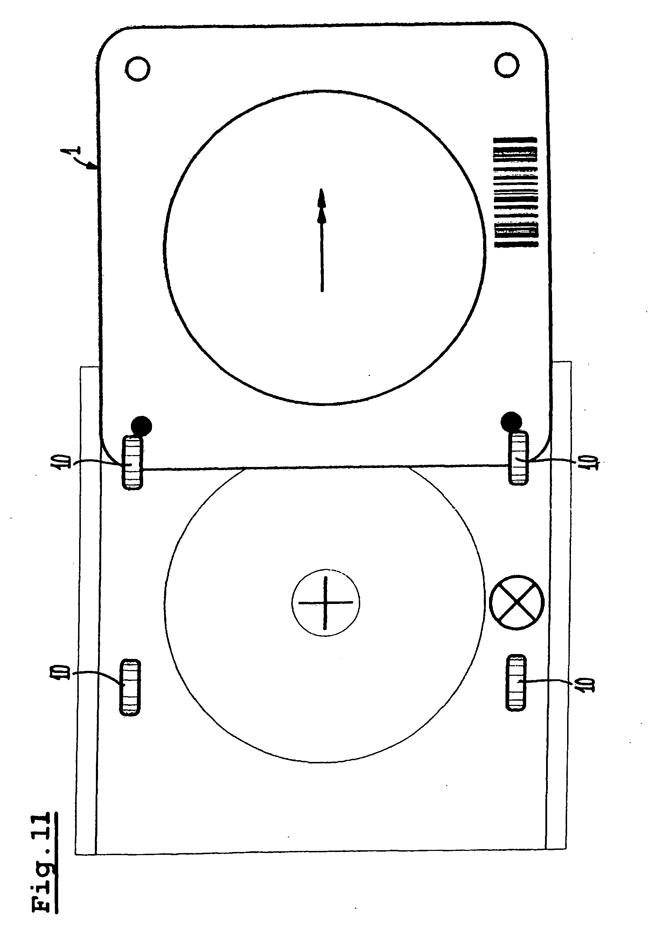

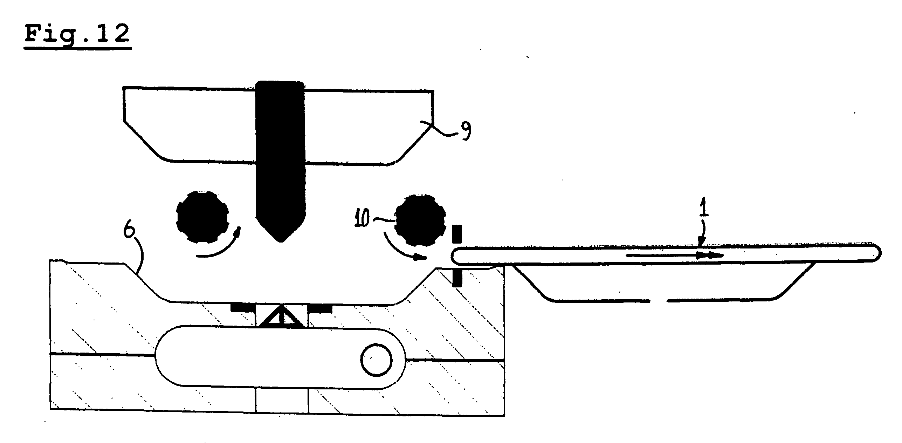

Finally, as illustrated in figures 11 and 12, the drive wheels 10 are activated again and the empty package 1 is removed from the apparatus. The apparatus now is ready for receiving a next package 1.

The invention is limited to the embodiments described before, which may be varied widely within the scope of the invention as defined by the appending claims. For example, the apparatus may comprise control means for enabling its operation (such as for example automatically activating the loading means for loading and unloading the package, automatically activating the pressure means, etcetera).

## Claims

1. Apparatus for preparing a beverage using a concentrate containing package, comprising a recess (6) for receiving said package, a mixing chamber (8) for mixing the concentrate with water and a concentrate discharge channel (7) debouching in said recess (6) and connecting to said mixing chamber (8), and means (9) for pressurizing the package, wherein package rupturing means (13) are positoned in said concentrate discharge channel, **characterised in that** the means (9) are movable pressure means for externally pressurizing the package and wherein the rupturing means (13) are positioned in a manner as not to protrude effectively into the recess (6).

2. Apparatus according to claim 1, wherein the package rupturing means (13) do not protrude at all into the recess (6).

3. Apparatus according to claim 1 or 2, wherein the concentrate discharge channel (7) is provided in a lower wall of the recess (6).

4. Apparatus according to claim 3, wherein the concentrate discharge channel (7) and the package rupturing means (13) extend substantially vertically.

5. Apparatus according to any of the claims 1-4, wherein the package rupturing means (13) comprise a knife.

6. Apparatus according to claim 5, wherein the knife comprises two crossing knife blades.

7. Apparatus according to any of the claims 1-6, comprising package loading means (10) for loading the package (1) into the recess (1).

8. Apparatus according to claim 7, wherein the package loading means (10) comprise drive wheels for engaging the package.

9. Apparatus according to any of the claims 1-8, wherein the apparatus comprises reading means (11) for markings (4) provided on the package.

10. Apparatus according to claim 9, wherein the markings reading means (11) operate for at least one of the following purposes: checking the correct position of the package in the recess and based thereon allowing or preventing the operation of the apparatus; checking the nature of the package and based thereon allowing or preventing the operation of the apparatus; providing information about the package and its contents (for example taste, mixing ratio, expiration date).

11. Apparatus according to any of the claims 1- 10, comprising sealing means (14) surrounding the concentrate discharge channel (7).

12. Apparatus according to any of the claims 1-11, wherein the recess (6) and/or mixing chamber (8) are defined in removable inserts of the apparatus.

13. Assembly for preparing a beverage, comprising a concentrate containing package (1) and an apparatus according to any of the previous claims for receiving the package and for preparing a beverage with the concentrate, wherein the package is sufficiently flexible as to bulge out locally towards the concentrate discharge channel (7) and into contact with the package rupturing means (13) when pressurized by the pressure means (9)

14. Assembly according to claim 13, wherein the package (1) is provided with markings (4) and wherein the apparatus comprises markings reading means (11).

15. Assembly according to claim 14, wherein the markings (4) comprise, among others, any of: a bar code, rf-chip and a pattern of holes.

## Patentansprüche

1. Vorrichtung zum Zubereiten eines Getränks mittels einer ein Konzentrat enthaltenden Verpackung, aufweisend eine Aussparung (6) zum Aufnehmen der Verpackung, eine Mischkammer (8) zum Mischen konzentrats mit Wasser, und einen Konzentrat-Ableitungskanal (7), der in die Aussparung (6) mündet und mit der Mischkammer (8) verbunden ist, und Mittel (9) zum Unter-Druck-Setzen der Verpackung, wobei Verpackungs-Aufreißmittel (13) in dem Konzentrat-Ableitungskanal angeordnet sind, **dadurch gekennzeichnet, dass** die Mittel (9) bewegbare Druckmittel zum externen Unter-Druck-Setzen der Verpackung sind, und wobei die Aufreißmittel (13) derart angeordnet sind, dass sie nicht effektiv in die Aussparung (6) hineinragen.

2. Vorrichtung- gemäß Anspruch 1, wobei die Verpackungx-Aufreißmittel (13) überhaupt nicht in die Aussparung (6) hineinragen.

3. Vorrichtung gemäß Anspruch 1 oder 2, wobei der Konzentrat-Ableitungskanal (7) in einer unteren Wand der Aussparung (6) vorgesehen ist.

4. Vorrichtung Anspruch 3, wobei der Konzentratleitungskanal (7) und die Verpackungs-Aufreißmittel (13) sich im Wesentlichen vertikal erstrecken.

5. Vorrichtung gemäß irgendeinem der Ansprüche 1 bis 4, wobei die Verpackungs-Aufreißmittel (13) ein Messer aufweisen.

6. Vorrichtung gemäß Anspruch 5, wobei das Messer (13) zwei sich kreuzende Messerklingen aufweist.

7. Vorrichtung gemäß irgendeinem der Ansprüche 1 bis 6, aufweisend Verpackungs-Lademittel (10) zum Laden der Verpackung (1) in die Aussparung (6).

8. Vorrichtung Anspruch 7, wobei die Verpackungs-Lademittel (10) Antriebsräder für einen Eingriff mit der Verpackung aufweisen.

9. Vorrichtung gemäß irgendeinem der Ansprüche 1 bis 8, wobei die Vorrichtung Lesemittel (11) für auf der Verpackung vorgesehene Markierungen (4) aufweist.

10. Vorrichtung gemäß Anspruch 9, wobei die Markierung-Lesemittel (11) zu mindestens einem der folgenden Zwecke funktionieren: Prüfen der korrekten Position der Verpackung in der Aussparung und, basierend darauf, Zulassen oder Verhindern betätigung der Vorrichtung, Prüfen der Art der Verpackung und, basierend darauf, Zulassen oder Verhindert der Betätigung der Vorrichtung, Bereitstellen von Informationen über die Verpackung und ihre Inhalte (zum Beispiel Geschmack, Mischverhältnis, Ablaufdatum).

11. Vorrichtung gemäß irgendeinem der Ansprüche 1 bis 10, aufweisend Dichtungsmittel (14), die den Konzentrat-Ableitungskanal (7) umgeben.

12. Vorrichtung gemäß irgendeinem der Ansprüche 1 bis 11, wobei die Aussparung (6) und/oder die Mischkammer (8) in lösbaren Einsätzen der Vorrichtung definiert sind.

13. Einrichtung zum Zubereiten eines Getränks, aufweisend eine ein Konzentrat enthaltende Verpackung (1) und eine Vorrichtung gemäß irgendeinem der vorhergehenden Ansprüche zum Aufnehmen verpackung und zum Zubereiten eines Getränks mit dem Konzentrat, wobei die Verpackung ausreichend flexibel ist, um sich lokal in Richtung zu dem Konzentrat-Ableitungskanal (7) und in Kontakt mit den Verpackungs-Aufreißmitteln (13) vorzuwölben, wenn sie durch die Druckmittel (9) unter Druck gesetzt wird.

14. Einrichtung gemäß Anspruch 13, wobei die Verpackung (1) mit Markierungen (4) versehen ist, und wobei die Vorrichtung Markierungs-Lesemittel (11) aufweist.

15. Einrichtung gemäß Anspruch 14, wobei die Markierungen (4) unter anderem irgendeines von einem Strichcode, einem RF-Chip und einem Muster von Löchern aufweisen.

## Revendications

1. Appareil permettant de préparer une boisson à l'aide d'un contenant on concentré, comprenant un évidement (6) permettant de recevoir ledit emballage, une chambre de mélange (8) permettant de mélanger le concentré avec de l'eau et un canal d'évacuation de concentré (7) débouchant dans ledit évidement (6) et relié à ladite chambre de mélange (8), et des moyens (9) permettant de mettre l'emballage sous pression, dans lequel des moyens de rupture d'emballage (13) sont positionnés dans ledit canal d'évacuation de concentré ; **caractérisé en ce que** les moyens (9) sont des moyens de pression mobiles permettant de mettre sous pression de façon externe l'emballage et dans lequel les moyens de rupture (13) sont positionnés de manière à ne pas faire saillie effectivement dans l'évidement (6).

2. Appareil selon la revendication 1, dans lequel les moyens de rupture d'emballage (13) ne font pas du tout saillie dans l'évidement (6).

3. Appareil selon la revendication 1 ou 2, dans lequel le canal d'évacuation de concentré (7) est disposé dans une paroi inférieure de l'évidement (6).

4. Appareil selon la revendication 3, dans lequel le canal d'évacuation de concentré (7) et les moyens de rupture d'emballage (13) s'étendent sensiblement verticalement.

5. Appareil selon l'une quelconque des revendications 1 à 4, dans lequel les moyens de rupture d'emballage (13) comprennent un couteau.

6. Appareil selon la revendication 5, dans lequel le couteau (13) comprend deux lames de couteau se croisant.

7. Appareil selon l'une quelconque des revendications 1 à 6, comprenant des moyens de chargement d'emballage (10) permettant de charger l'emballage (1) dans l'évidement (6).

8. Appareil selon la revendication 7, dans lequel les moyens de chargement d'emballage (10) comprennent des roues d'entraînement permettant de venir en contact avec l'emballage.

9. Appareil selon l'une quelconque des revendications 1 à 8, dans lequel l'appareil comprend des moyens de lecture (11) pour des marquages (4) disposés sur l'emballage.

10. Appareil selon la revendication 9, dans lequel les moyens de lecture de marquage (11) fonctionnent dans au moins un des buts suivants : vérifier la position correcte de l'emballage dans l'évidement et d'après cela, permettre ou empêcher le fonctionnement de l'appareil ; vérifier la nature de l'emballage et d'après cela permettre ou empêcher le fonctionnement de l'appareil fournir des informations relatives à l'emballage et à son contenu (par exemple le goût, le rapport de mélange, la date d'expiration).

11. Appareil selon l'une quelconque des revendications 1 à 10, comprenant des moyens de scellement (14) entourant le canal d'évacuation de concentré (7).

12. Appareil selon l'une quelconque des revendications 1 à 11, dans lequel l'évidement (6) et/ou la chambre de mélange (8) sont définis dans des inserts amovibles de l'appareil.

13. Ensemble permettant de préparer une boisson, comprenant un emballage contenant un concentré (1) et un appareil selon l'une quelconque des revendications précédentes permettant de recevoir l'emballage et de préparer une boisson avec le concentre, dans l'emballage est suffisamment flexible pour se renfler localement vers le canal d'évacuation de concentré (7) et venir en contact avec les moyens de rupture d'emballage (13) lorsqu'il est mis sous pression par les moyens de pression (9).

14. Ensemble selon la revendication 13, dans lequel l'emballage (1) est pourvu de marquages (4) et dans lequel l'appareîl comprend des moyens de lecture de marquages (11).

15. Ensemble selon la revendication 14, dans lequel les marquages (4) comprennent, entre autres, l'un quelconque des éléments suivants : un code-barres, une puce radiofréquence et un motif de trous.
